# EUROPEAN PATENT APPLICATION

(11) **EP 4 598 205 A1**
(43) Date of publication of application: **06.08.2025**
(21) Application number: 22960069.7
(22) Date of filing: 29.09.2022
(51) Int. Cl.: H04W 72/1273, H04W 72/12

(54) **SCHEDULING METHOD AND APPARATUS, DEVICE, AND READABLE STORAGE MEDIUM**

(71) Applicant: Beijing Xiaomi Mobile Software Co., Ltd., Beijing 100085 (CN)
(72) Inventor: QIAO, Xuemei, Beijing 100085 (CN); MU, Qin, Beijing 100085 (CN)
(74) Representative: Dehns Germany Partnerschaft mbB
(86) International application number: PCT/CN2022/122757
(87) International publication number: WO 2024/065432

(57) **Abstract**

The present disclosure relates to the field of communications, and provides a scheduling method and apparatus, a device, and a readable storage medium. The method comprises: individually scheduling a broadcast physical downlink shared channel (PDSCH) to a first type of terminal, so that broadcast PDSCHs corresponding to different terminals are individually scheduled in a network where different types of terminals coexist, and therefore, when the broadcast PDSCH corresponding to the first type of terminal is scheduled, the influence on scheduling of other types of terminals can be avoided as much as possible.

## Description

### TECHNICAL FIELD

The present disclosure relates to the field of communication, and in particular to a scheduling method and apparatus, a device, and a readable storage medium.

### BACKGROUND

In the 5G new radio (NR), in the version Release 17 of the 3rd generation partnership project (3GPP), a reduced capability terminal device with relatively relaxed requirements for the data rate, namely the reduced capability UE, i.e., the RedCap terminal, is obtained by adopting a method of reducing complexity for an ordinary terminal. In addition, Release 18 plans to further reduce the terminal cost on the basis of Release 17, so as to meet the service/terminal cost requirements that fall between those of the R17 RedCap terminal and the LPWA terminal.

In the related art, the above-mentioned method of reducing complexity may be applied to a unicast channel and a broadcast channel. For a broadcast channel, such as RAR and paging, etc., the scheduling performed by a network for a legacy terminal with old version may exceed 5MHz due to payload overhead considerations.

However, in a network where a legacy terminal and an eRedCap terminal coexist, due to the limitation of the data channel bandwidth of 5MHz of the eRedCap terminal, the scheduling process of the legacy terminal may be affected by the limitation of the eRedCap terminal.

### SUMMARY

The embodiments of the present disclosure provide a scheduling method and apparatus, a device and a readable storage medium. In a network where different types of terminals coexist, broadcast PDSCHs corresponding to different terminals are scheduled separately, so that when the broadcast PDSCH corresponding to a first type-terminal is scheduled, the impact on the scheduling of other types of terminals can be avoided as much as possible. The technical solution is as follows.

According to an aspect of the present disclosure, a scheduling method is provided, where the method is performed by a network device, and the method includes:
separately scheduling a broadcast physical downlink shared channel (PDSCH) to a first-type terminal.

In another aspect, a scheduling method is provided, where the method is performed by a first-type terminal, and the method includes:
receiving a broadcast PDSCH sent by a network device, where the broadcast PDSCH is a channel scheduled separately by the network device.

In another aspect, a scheduling apparatus is provided, which is applied to a network device, and the apparatus includes:
a scheduling module, configured to separately schedule a broadcast physical downlink shared channel (PDSCH) to a first-type terminal.

In another aspect, a scheduling apparatus is provided, which is applied to a terminal, and the apparatus includes:
a receiving module, configured to receive a broadcast PDSCH sent by a network device, where the broadcast PDSCH is a channel scheduled separately by the network device.

In another aspect, a terminal is provided, and the terminal includes:
a processor; and
a transceiver connected to the processor;
where the processor is configured to execute executable instructions to implement the scheduling method as described in the above-mentioned embodiment of the present disclosure.

In another aspect, a network device is provided, and the network device includes:
a processor; and
a transceiver connected to the processor;
where the processor is configured to execute executable instructions to implement the scheduling method as described in the above -mentioned embodiment of the present disclosure.

In another aspect, a computer-readable storage medium is provided, which stores at least one instruction, at least one program, a code set or an instruction set, and the at least one instruction, the at least one program, the code set or instruction set is executed by a processor to implement the scheduling methods as described in the above-mentioned embodiments of the present disclosure.

The beneficial effects brought by the technical solutions provided by the embodiments of the present disclosure include at least the following.

The broadcast PDSCH is scheduled separately to the first-type terminal, so that in a network where different types of terminals coexist, the broadcast PDSCHs corresponding to different terminals are scheduled separately. Thus, when the broadcast PDSCH corresponding to the first-type terminal is scheduled, the impact on the scheduling of other types of terminals can be avoided as much as possible.

### BRIEF DESCRIPTION OF THE DRAWINGS

In order to more clearly illustrate the technical solutions of the embodiments of the present disclosure, the accompanying drawings to be used in the description of the embodiments of the present disclosure will be briefly introduced below. Obviously, the drawings in the following description are only some embodiments of the present disclosure. For those of ordinary skill in art, other drawings can also be obtained according to these drawings without the need for creative effort.
FIG. 1 is a block diagram of an architecture of a communication system provided by an embodiment of the present disclosure.
FIG. 2 is a flowchart of a scheduling method performed on a network device side provided by an exemplary embodiment of the present disclosure.
FIG. 3 is a flowchart of a scheduling method performed on a network device side provided by another exemplary embodiment of the present disclosure.
FIG. 4 is a flowchart of a scheduling method performed on a network device side provided by yet another exemplary embodiment of the present disclosure.
FIG. 5 is a flowchart of a scheduling method performed on a network device side provided by still another exemplary embodiment of the present disclosure.
FIG. 6 is a flowchart of a scheduling method performed on a terminal side provided by an exemplary embodiment of the present disclosure.
FIG. 7 is a flowchart of a scheduling method performed by interaction between a terminal side and a network device side provided by an exemplary embodiment of the present disclosure.
FIG. 8 is a schematic structural diagram of a scheduling apparatus shown by an exemplary embodiment of the present disclosure.
FIG. 9 is a schematic structural diagram of a scheduling apparatus shown by another exemplary embodiment of the present disclosure.
FIG. 10 is a structural block diagram of a communication device shown by an exemplary embodiment of the present disclosure.

### DETAILED DESCRIPTION

In order to make the objectives, technical solutions, and advantages of the present disclosure clearer, the embodiments of the present disclosure will be described in detail below with reference to the accompanying drawings.

In 5G New Radio (NR), in R17 of 3GPP, the following complexity reduction method is usually adopted to obtain a reduced capability terminal device, i.e., a RedCap terminal, with relatively relaxed requirements for the data rate.
(1) The baseband processing bandwidth is reduced, for example, the frequency domain width of the physical downlink shared channel (PDSCH) received by the eRedCap terminal is limited to be within 5MHz.
(2) The maximum number of resource blocks (RBs) is limited, for example, the number of resources of the data channel is reduced to within 5 MHz. The reduced resources are continuous or discrete in the frequency domain.

In the related art, the above-mentioned method of reducing complexity may be applied to a unicast channel and a broadcast channel. For a broadcast channel, such as RAR and paging, etc., the network may schedule a legacy terminal with a bandwidth exceeding 5MHz due to payload overhead considerations.

However, in a network where a legacy terminal and an eRedCap terminal coexist, due to the limitation of bandwidth of the eRedCap terminal, the scheduling process of the legacy terminal may be affected by the limitation of eRedCap terminal.

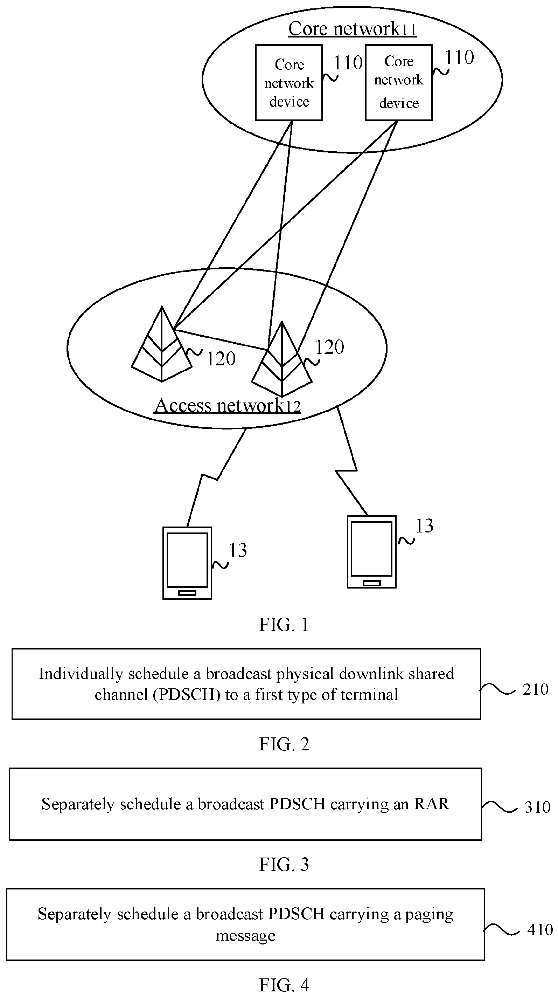

FIG. 1 shows a block diagram of a communication system provided by an illustrative embodiment of the present disclosure. The communication system may include: a core network 11, an access network 12, and a terminal 13.

The core network 11 includes several core network devices 110. The core network device 110 is a device deployed in the core network. The main functions of the core network device are to provide user connection, user management, complete the bearer for a service, and serve as a bearer to provide an interface to the external network. For example, the core network device in a 5G NR system may include an access and mobility management function (AMF) network element, a user plane function (UPF) network element, a session management function (SMF) network element, etc. Illustratively, the core network device 30 in the embodiments of the present application may include a location management function network element. Optionally, the location management function network element includes a location server, and the location server may be implemented as any of the following: a location management function (LMF), an enhanced serving mobile location centre (ESMLC), a secure user plane location (SUPL), or a SUPL Location Platform (SUPL SLP).

The access network 12 includes several access network devices 120. The access network device 120 may be a base station, which is a device deployed in the access network to provide wireless communication functions for the terminal. Base stations may include various forms of macro base stations, micro base stations, relay stations, access points, or transmission reception points (TRPs), etc. In systems adopting different wireless access technologies, the names of devices with base station functions may vary. For example, in an LTE system, it is referred to as an eNodeB or eNB; in a 5G NR system, it is referred to as a gNodeB or gNB. As communication technology evolves, the term "base station" may change. For the convenience of description, the aforementioned apparatuses providing wireless communication functions for terminals are collectively referred to as access network devices in the embodiments of the present disclosure.

The terminal 13 may include various handheld devices, vehicle devices, wearable devices, computing devices, or other processing devices connected to wireless modems with wireless communication functions, and terminals in various forms, a Mobile Station (MS), and a terminal device, etc. For the convenience of description, the above-mentioned devices are collectively referred to as terminals. In the embodiments of the present application, the terminal 13 includes an ordinary terminal and an eRedCap terminal. Compared with the ordinary terminal, the eRedCap terminal is characterized by lower complexity and power savings. The access network device 120 communicates with the terminal 13 through a certain air interface technology, such as a Uu interface.

Industrial sensors, video surveillance cameras, and wearable devices based on 5G do not require such a large bandwidth. Especially for industrial sensors, only a transmission bandwidth of a few megabits is required. Such terminals may be classified as a new type of terminal in the enhancements of subsequent releases of 5G, and corresponding technical characteristics may be improved. That is, the eRedCap terminal provided in the embodiments of the present application is a terminal obtained after version enhancement of the above ordinary terminal, so that the eRedCap terminal better may better adapt to scenarios with low latency and high rate. The eRedCap terminal may also be simply referred to as an NR-lite (lightweight) terminal, which is similar to the IoT devices in LTE and needs to meet the following requirements:
1. Low cost and low complexity;
2. Coverage enhancement to a certain extent; and
3. Power saving.

Optionally, in the process of wireless communication between the terminal 13 and the network device 120, the wireless communication may be performed through a licensed frequency band or through an unlicensed frequency band.

Schematically, reference is made to FIG. 2, which is a flowchart of a scheduling method provided by an exemplary embodiment of the present disclosure. Taking the method applied to a network device as an example for illustration, as shown in FIG. 2, the method includes the following step 210.

In step 210, a broadcast physical downlink shared channel (PDSCH) is separately scheduled to a first-type terminal.

Optionally, the first-type terminal includes an enhanced reduced capability (eRedCap) terminal.

The eRedCap terminal is an enhanced terminal with enhanced reduced capability, that is, the eRedCap terminal is represented as an enhanced reduced capability UE. Schematically, the enhanced reduced capability is used to indicate the enhancement for reducing the terminal capability. Schematically, the eRedCap terminal is a RedCap terminal, and the terminal capability of the eRedCap terminal is reduced compared to an ordinary terminal (a legacy terminal).

Optionally, the broadcast PDSCH carries at least one of the following information: a random access response (RAR); and a paging message. For example, the broadcast PDSCH carries the RAR; or the broadcast PDSCH carries the paging message; or the broadcast PDSCH carries the RAR and the paging message.

In an optional embodiment, different terminals have their corresponding broadcast PDSCHs respectively.

Optionally, a first broadcast PDSCH corresponding to the first-type terminal is scheduled separately; and/or a second broadcast PDSCH corresponding to a second-type terminal is scheduled separately. Schematically, the second-type terminal includes an ordinary legacy terminal.

It is worth noting that the first-type terminal including the eRedCap terminal and the second-type terminal including the legacy terminal is only an illustrative example, which is not limited by embodiments of the present application.

In an optional embodiment, the following description is given by taking the first-type terminal as an eRedCap terminal and the second-type of terminal as a non-eRedCap terminal (e.g., a legacy terminal) as an example.

The eRedCap terminal corresponds to a first broadcast PDSCH, and the non-eRedCap terminal corresponds to a second broadcast PDSCH.

Optionally, when scheduling the broadcast PDSCH, the first broadcast PDSCH corresponding to the eRedCap terminal is scheduled separately; and/or the second broadcast PDSCH corresponding to the non-eRedCap terminal is scheduled separately.

Illustratively, the process of separately scheduling the broadcast PDSCHs respectively corresponding to different terminals may be implemented in one of the following forms.
1. Separate scheduling is performed for the broadcast PDSCH of the eRedCap terminal.
   Illustratively, for the eRedCap terminal, when scheduling the broadcast PDSCH of the eRedCap terminal, the first broadcast PDSCH corresponding to the eRedCap terminal is scheduled separately.
2. Separate scheduling is performed for the broadcast PDSCH of the non-eRedCap terminal.
   Illustratively, for the non-eRedCap terminal, when scheduling the broadcast PDSCH of the non-eRedCap terminal, the second broadcast PDSCH corresponding to the non-eRedCap terminal is scheduled separately.
3. Separate scheduling is performed for the broadcast PDSCHs corresponding to the eRedCap terminal and the non-eRedCap terminal, respectively.

Illustratively, for the eRedCap terminal and the non-eRedCap terminal, when scheduling the broadcast PDSCH corresponding to the terminal, the first broadcast PDSCH corresponding to the eRedCap terminal is scheduled separately, and the second broadcast PDSCH corresponding to the non-eRedCap terminal is scheduled separately.

It is worth noting that the above examples are merely illustrative and the embodiments of the present application are not limited thereto.

Optionally, when the broadcast PDSCHs of the eRedCap terminal are transmitted, the broadcast PDSCHs carrying different information are scheduled separately. Schematically, when the broadcast PDSCH carries RAR, the broadcast PDSCH carrying the RAR is scheduled separately; when the broadcast PDSCH carries a paging message, the broadcast PDSCH carrying RAR is scheduled separately.

Illustratively, according to the difference in carried information, the process of separately scheduling the broadcast PDSCHs corresponding to different terminals may be implemented in one of the following forms.
1. According to the difference in carried information, a first broadcast PDSCH corresponding to the eRedCap terminal is scheduled separately.

Illustratively, when the broadcast PDSCH of the eRedCap terminal (i.e., the first broadcast PDSCH corresponding to the eRedCap terminal) carries an RAR, the network device separately schedules the first broadcast PDSCH carrying the RAR.

Alternatively, when the first broadcast PDSCH corresponding to the eRedCap terminal carries a paging message, the network device separately schedules the first broadcast PDSCH carrying the paging message.

Alternatively, when the first broadcast PDSCH corresponding to the eRedCap terminal carry the RAR and the paging message, the network device separately schedules the first broadcast PDSCH carrying the RAR, and separately schedules the first broadcast PDSCH carrying the paging message.

2. According to the difference in carried information, a second broadcast PDSCH corresponding to the non-eRedCap terminal is scheduled separately.

Illustratively, when the broadcast PDSCH of the non-eRedCap terminal (i.e., the second broadcast PDSCH corresponding to the non-eRedCap terminal) carries an RAR, the network device separately schedules the second broadcast PDSCH carrying the RAR.

Alternatively, when the second broadcast PDSCH corresponding to the non-eRedCap terminal carries a paging message, the network device separately schedules the second broadcast PDSCH carrying the paging message.

Alternatively, when the second broadcast PDSCH corresponding to the non-eRedCap terminal carries the RAR and the paging message, the network device separately schedules the second broadcast PDSCH carrying the RAR, and separately schedules the second broadcast PDSCH carrying the paging message.

3. According to the difference in carried information, the broadcast PDSCHs corresponding to the eRedCap terminal and the non-eRedCap terminal are scheduled separately.
(1) In the case that the first broadcast PDSCH corresponding to the eRedCap terminal and the second broadcast PDSCH corresponding to the non-eRedCap terminal each carries a corresponding RAR, for example, the first broadcast PDSCH corresponding to the eRedCap terminal carries a first RAR, and the second broadcast PDSCH corresponding to the non-eRedCap terminal carries a second RAR, when the network device separately schedules the broadcast PDSCHs carrying different information, the network device separately schedules the first broadcast PDSCH carrying the first RAR, and separately schedules the second broadcast PDSCH carrying the second RAR.
(2) In the case that the first broadcast PDSCH corresponding to the eRedCap terminal and the second broadcast PDSCH corresponding to the non-eRedCap terminal each carries a corresponding paging message, for example, the first broadcast PDSCH corresponding to the eRedCap terminal carries a first paging message, and the second broadcast PDSCH corresponding to the non-eRedCap terminal carries a second paging message, when the network device separately schedules the broadcast PDSCHs carrying different information, the first broadcast PDSCH carrying the first paging message is separately scheduled, and the second broadcast PDSCH carrying the second paging message is separately scheduled.
(3) In the case that the first broadcast PDSCH corresponding to the eRedCap terminal carries an RAR and the second broadcast PDSCH corresponding to the non-eRedCap terminal carries a paging message, when the network device schedules the broadcast PDSCHs carrying different information separately, the first broadcast PDSCH carrying the RAR is scheduled separately and the second broadcast PDSCH carrying the paging message is scheduled separately.
(4) In the case that the first broadcast PDSCH corresponding to the eRedCap terminal carries a paging message and the second broadcast PDSCH corresponding to the non-eRedCap terminal carries an RAR, when the network device separately schedules the broadcast PDSCHs carrying different information, the first broadcast PDSCH carrying the paging message is scheduled separately and the second broadcast PDSCH carrying the RAR is scheduled separately.
(5) In the case that the first broadcast PDSCHs corresponding to the eRedCap terminal and the second broadcast PDSCHs corresponding to the non-eRedCap terminal respectively carry a corresponding RAR and a paging message, for example, the first broadcast PDSCHs corresponding to the eRedCap terminal carries a first RAR and a first paging message, and the second broadcast PDSCHs corresponding to the non-eRedCap terminal carry a second RAR and a second paging message, when the network device separately schedules the broadcast PDSCHs carrying different information, the first broadcast PDSCH carrying the first RAR is separately scheduled, and the first broadcast PDSCH carrying the first paging message is separately scheduled; the second broadcast PDSCH carrying the second RAR is separately scheduled, and the second broadcast PDSCH carrying the second paging message is separately scheduled.

It is worth noting that the above are merely illustrative examples and the embodiments of the present application are limited thereto.

Optionally, the non-eRedCap terminal is a legacy terminal. Optionally, compared with the eRedCap terminal, the legacy terminal may have a greater bandwidth processing capability, for example, the bandwidth processing capability of the eRedCap terminal is within 5 MHZ, and the bandwidth processing capability of the legacy terminal is 20MHZ, etc. The above is only an illustrative example, and the embodiments of the present application are not limited thereto.

In summary, the broadcast PDSCH is scheduled separately to the first-type terminal, so that in a network where different types of terminals coexist, the broadcast PDSCHs corresponding to different terminals are scheduled separately. Thus, when the broadcast PDSCH corresponding to the first-type terminal is scheduled, the impact on the scheduling of other types of terminals can be avoided as much as possible.

In the embodiments of the present application, according to the difference in information carried by the broadcast channels, the process of performing separate scheduling for different broadcast channels includes at least one of the following manners.

Method 1: For separate scheduling of RAR, the first-type terminal is required to perform early indication when transmitting PRACH. For example, for separate scheduling of RAR, the eRedCap terminal is required to perform early indication when transmitting PRACH.

Method 2: For separate scheduling of paging, when the first-type terminal is in an idle state and CN side paging is to be performed, the device type of first-type device or the bandwidth capability of the first-type terminal, etc., is notified to the network device through an RRC signaling between nodes. For example, for separate scheduling of paging, when the eRedCap terminal is in an idle state and CN side paging is to be performed, the eRedCap device type or the bandwidth capability of the eRedCap terminal is notified to the network device through the RRC signaling between nodes.

Method 3: The process of performing separate scheduling for a broadcast PDSCH is implemented by configuring a separate scheduling parameter and/or transmission resource parameter.

The above methods are introduced in detail respectively.

**Method 1: For separate scheduling of RAR, the first-type terminal is required to perform early indication when transmitting PRACH.**

Schematically, as shown in FIG. 3, the above step 210 may also be implemented as the following step 310.

In step 310, a broadcast PDSCH carrying an RAR is scheduled separately.

In an optional embodiment, the following description is given by taking the first-type terminal implemented as an eRedCap terminal as an example.

Schematically, when broadcast physical downlink shared channel (PDSCHs) are transmitted, the broadcast PDSCH that is used to carry the RAR of an enhanced reduced capability (eRedCap) terminal is scheduled separately. That is, in the case that the content carried by the broadcast PDSCH corresponding to the eRedCap terminal is RAR, when the broadcast PDSCH of the eRedCap terminal is transmitted, the broadcast PDSCH carrying the RAR is scheduled separately.

For example, the broadcast PDSCH corresponding to the eRedCap terminal is a first broadcast PDSCH. When the first broadcast PDSCH of the eRedCap terminal is transmitted, the operation status and operation resources, etc., of the RAR in the first broadcast PDSCH carrying the RAR are read separately.

Optionally, first indication information is received, where the first indication information is used to indicate a device type of the first-type terminal and/or a channel bandwidth of the terminal to the network device. For example, the first indication information is used to indicate the device type of the eRedCap terminal and/or the channel bandwidth of the terminal to the network device.

Optionally, a physical random access channel (PRACH) is received, where the PRACH carries first indication information.

Illustratively, the first indication information includes early indication information. The early indication information is used to indicate the device type of the eRedCap terminal and/or the channel bandwidth of the terminal to the network device.

For example, the network device first receives the PRACH transmitted by the eRedCap terminal. After receiving the PRACH transmitted by the eRedCap terminal, the network device reads the early indication information in the PRACH so that the network device can determine the device type of the eRedCap terminal based on the early indication information.

Optionally, the network device receives terminal type information sent by the eRedCap terminal.

Illustratively, the terminal type information is indicated in a message 1 (MSG1) in an explicit or implicit manner. Alternatively, the terminal type information is carried in a physical uplink shared channel (PUSCH) of a message A, etc.

Optionally, the terminal type information includes the device type of the eRedCap terminal. That is, the eRedCap terminal sends indication information of the terminal type to the network device, so that the network device determines the device type of the eRedCap terminal according to the terminal type information.

It is worth noting that the above are merely illustrative examples and the embodiments of the present application are not limited thereto.

In summary, the broadcast PDSCH is scheduled separately to the first-type terminal, so that in a network where different types of terminals coexist, the broadcast PDSCHs corresponding to different terminals are scheduled separately. Thus, when the broadcast PDSCH corresponding to the first-type terminal is scheduled, the impact on the scheduling of other types of terminals can be avoided as much as possible.

In the embodiment of the present application, the information carried in the broadcast PDSCH being implemented as RAR is taken as an example for illustration. When the broadcast PDSCH of the first type of terminal is transmitted, the network device separately schedules the broadcast PDSCH carrying the RAR, so as to avoid affecting the scheduling of legacy terminals as much as possible when scheduling the broadcast PDSCH corresponding to the first-type terminal.

**Method 2: For separate scheduling of paging, when the first-type terminal is in an idle state and CN side paging is to be performed, the device type of first-type device or the bandwidth capability of the first-type terminal, etc., is notified to the network device through an RRC signaling between nodes.**

Schematically, as shown in FIG. 4, the above step 210 may also be implemented as the following step 410.

In step 410, separate scheduling is performed for a broadcast PDSCH carrying a paging message.

In an optional embodiment, the following description is given by taking the first-type terminal implemented as an eRedCap terminal as an example.

Schematically, when the content carried in the broadcast PDSCH is a paging message, when transmission is performed for the broadcast PDSCH that corresponds to an eRedCap terminal and carries the paging message, the broadcast PDSCH is scheduled separately.

In an optional embodiment, second indication information is received, where the second indication information is used to indicate a device type of the terminal and/or a channel bandwidth of the terminal.

Optionally, a radio resource control (RRC) signaling is received, where the RRC signaling carries the second indication information.

The RRC signaling includes the device type of the terminal and/or the channel bandwidth of the terminal.

Schematically, when the eRedCap terminal is in an idle state and needs to be paged on the core network (CN) side, the core network node may send the device type and/or bandwidth capability of the eRedCap terminal to the base station through an RRC signaling between. The base station distinguishes whether the paged terminal is a legacy terminal or an eRedCap terminal based on the received device type and/or bandwidth capability information of the eRedCap terminal, and then adopts a scheduling strategy corresponding to the terminal type. For example, one broadcast PDSCH is used to carry paging messages of a plurality of legacy terminals, and another broadcast PDSCH is used to carry paging messages of a plurality of eRedCap terminals. Optionally, the width of the frequency domain resource of the broadcast PDSCH carrying the paging messages of legacy terminals may be greater than 5MHz, and the width of the frequency domain resource of the broadcast PDSCH carrying the paging messages of eRedCap terminals is less than or equal to 5MHz.

Schematically, when RRC signaling is sent to the network device through a node, the core network device sends the RRC signaling to the network device through a node between the core network device and the network device. The network device may determine the device type of the terminal and/or the channel bandwidth of the terminal based on the RRC signaling.

For example, the network device determines the device type of the eRedCap terminal based on the RRC signaling; or, the network device determines the channel bandwidth of the eRedCap terminal based on the RRC signaling; or, the network device determines the device type and channel bandwidth of the eRedCap terminal based on the RRC signaling, etc.

In an optional embodiment, the RRC signaling includes at least one of the following:

a channel bandwidth corresponding to the eRedCap terminal; a data channel bandwidth corresponding to the eRedCap terminal; and a PDSCH channel bandwidth corresponding to the eRedCap terminal.

Schematically, a channel bandwidth of 5 MHZ is used as an example for illustration. When the RRC signaling is implemented as the channel bandwidth corresponding to the eRedCap terminal, the RRC signaling may include the following bytes: ChannelBWnomorethanSMHZ-r18; when the RRC signaling is implemented as the data channel bandwidth corresponding to the eRedCap terminal, the RRC signaling may include the following bytes: dataChannelBWnomorethan5MHZ-r18; and when the RRC signaling is implemented as the PDSCH channel bandwidth corresponding to the eRedCap terminal, the RRC signaling may include the following bytes: PDSCHChannelBWnomorethanSMHZ-r18.

It is worth noting that the above are merely illustrative examples and the embodiments of the present application are not limited thereto.

In summary, the broadcast PDSCH is scheduled separately to the first-type terminal, so that in a network where different types of terminals coexist, the broadcast PDSCHs corresponding to different terminals are scheduled separately. Thus, when the broadcast PDSCH corresponding to the first-type terminal is scheduled, the impact on the scheduling of other types of terminals can be avoided as much as possible.

In the embodiment of the present application, the information carried in the broadcast PDSCH being implemented as a paging message is taken as an example for illustration. When the broadcast PDSCH of the first type of terminal is transmitted, the network device separately schedules the broadcast PDSCH carrying the paging message, so as to avoid affecting the scheduling of legacy terminals as much as possible when scheduling the broadcast PDSCH corresponding to the first-type terminal.

**Method 3: The process of performing separate scheduling for a broadcast PDSCH is implemented by configuring an independent scheduling parameter and/or transmission resource parameter.**

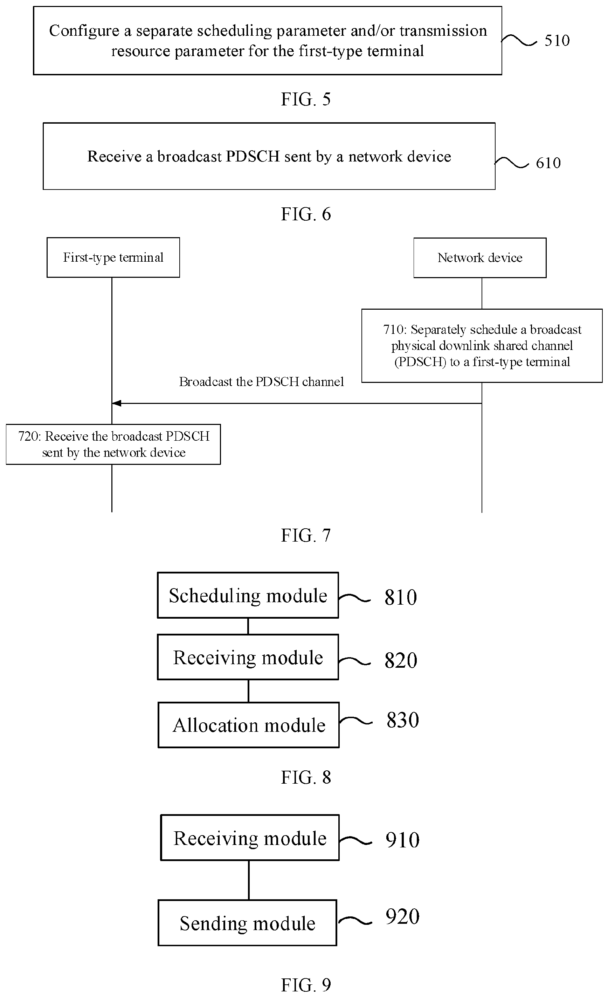

Schematically, as shown in FIG. 5, the above step 210 may also be implemented as the following step 510.

In step 510, a separate scheduling parameter and/or transmission resource parameter is configured for the first-type terminal.

Optionally, when performing broadcast PDSCH transmission, broadcast PDSCHs of different terminals are scheduled separately. Optionally, the broadcast PDSCH carries at least one of the following information: an RAR; and a paging message.

In an optional embodiment, the following description is given by taking the first-type terminal implemented as an eRedCap terminal as an example.

Schematically, when the broadcast PDSCHs are scheduled separately, compared with the legacy terminal, the network device configures a separate scheduling parameter and/or transmission resource parameter for the eRedCap terminal. For example, the broadcast PDSCH corresponding to an eRedCap terminal is a first broadcast PDSCH, and when the first broadcast PDSCH carrying an RAR is scheduled separately, the eRedCap terminal is configured with a separate scheduling parameter and/or transmission resource parameter. Alternatively, when the first broadcast PDSCH carrying a paging message is scheduled separately, the eRedCap terminal is configured with a separate scheduling parameter and/or transmission resource parameter.

Optionally, the separate scheduling parameter and/or transmission resource parameter is used to indicate that the scheduling parameter and/or transmission resource parameter is sent separately for the first-type terminal.

It is worth noting that the above are merely illustrative examples and are not limited to the embodiments of the present application.

Schematically, the legacy terminal is configured to minimize the reading of downlink control information (DCI) and/or PDSCH that does not belong to itself; and/or, the eRedCap terminal is configured to minimize the reading of DCI that is not used for scheduling itself.

In an optional embodiment, the broadcast PDSCH is scheduled separately by configuring a separate scheduling parameter and/or transmission resource parameter for the eRedCap terminal.

Optionally, taking the information carried in the broadcast PDSCH implemented as an RAR as an example, when the broadcast PDSCH needs to be separately scheduled, the process of separately scheduling the broadcast PDSCH is implemented by allocating a separate transmission resource parameter to the eRedCap terminal. For example, the broadcast PDSCH corresponding to the eRedCap terminal is the first broadcast PDSCH, and the information carried in the first broadcast PDSCH is implemented as the RAR. When the first broadcast PDSCH needs to be separately scheduled, the process of separately scheduling the first broadcast PDSCH is realized by allocating a separate transmission resource parameter to the eRedCap terminal.

Optionally, taking the information carried in the broadcast PDSCH implemented as a paging message as an example, when the broadcast PDSCH needs to be separately scheduled, the process of separately scheduling the broadcast PDSCH is implemented by allocating a separate transmission resource parameter to the eRedCap terminal. For example, the broadcast PDSCH corresponding to the eRedCap terminal is a first broadcast PDSCH, and the information carried in the first broadcast PDSCH is implemented as the paging message. When the first broadcast PDSCH needs to be separately scheduled, the process of separately scheduling the first broadcast PDSCH is realized by allocating a separate transmission resource parameter to the eRedCap terminal.

It is worth noting that the above are merely illustrative examples and are not limited to the embodiments of the present application.

In an optional embodiment, the separate scheduling parameter and/or transmission resource parameter includes at least one of the following:
a bandwidth part (BWP); a control resource set (CORESET); a common search space (CSS); a paging radio network temporary identifier (P-RNTI); a system information radio network temporary identifier (SI-RNTI); a random access radio network temporary identifier (RA-RNTI); a demodulation reference signal (DMRS) sequence or pattern; a downlink control information (DCI) length; an indication using a reserved bit in a DCI.

Optionally, when the separate transmission resource parameter allocated for the broadcast channel is implemented as a BWP, the separate BWP is used to send a physical downlink control channel (PDCCH) and a physical downlink shared channel (PDSCH) to the eRedCap terminal.

Optionally, when the separate transmission resource parameter allocated for the broadcast channel is implemented as a CORESET, the separate CORESET is used to send a DCI to schedule the broadcast PDSCH to the eRedCap terminal.

Optionally, when the separate transmission resource parameter allocated for the broadcast channel is implemented as a CSS, the separate CSS is used to send the DCI to schedule the broadcast PDSCH for the eRedCap terminal.

Optionally, when the separate transmission resource parameter allocated for the broadcast channel is implemented as a P-RNTI, the separate P-RNTI is used to send a PDSCH carrying a paging message and a scheduling DCI to the eRedCap terminal.

Optionally, when the separate transmission resource parameter allocated for the broadcast channel is implemented as a SI-RNTI, the separate SI-RNTI is used to send a PDSCH carrying a system message and the scheduling DCI to the eRedCap terminal.

Optionally, when the separate transmission resource parameter allocated for the broadcast channel is implemented as a RA-RNTI, the separate RA-RNTI is used to send a PDSCH carrying an RAR message and the scheduling DCI to the eRedCap terminal.

Optionally, when the separate transmission resource parameter allocated for the broadcast channel is implemented as a DMRS sequence or pattern, the separate DMRS sequence or DMRS pattern is used to send the PDCCH and/or the PDSCH to the eRedCap terminal.

Optionally, when the separate transmission resource parameter allocated for the broadcast channel is implemented as a DCI length, the separate DCI length is used to send the DCI to schedule the broadcast PDSCH to the eRedCap terminal.

Optionally, when the separate transmission resource parameter allocated for the broadcast channel is implemented as an indicator using a reserved bit in the DCI, the eRedCap terminal is instructed whether to receive the PDSCH based on an indication of the reserved bit in the DCI. Schematically, whether to send the PDSCH is determined according to an indication of the reserved bit in the DCI. For example, when the indicator of the reserved bit in the DCI is 1, the corresponding PDSCH, etc., is not sent to the eRedCap terminal.

It is worth noting that the above are merely illustrative examples and are not limited to the embodiments of the present application.

In summary, the broadcast PDSCH is scheduled separately to the first-type terminal, so that in a network where different types of terminals coexist, the broadcast PDSCHs corresponding to different terminals are scheduled separately. Thus, when the broadcast PDSCH corresponding to the first-type terminal is scheduled, the impact on the scheduling of other types of terminals can be avoided as much as possible.

Schematically, reference is made to FIG. 6, which is a flowchart of a scheduling method provided by an exemplary embodiment of the present disclosure. Taking the first-type terminal implemented as an eRedCap terminal as an example for description, as shown in FIG. 6, the method includes the following step 610.

In step 610, a broadcast PDSCH is received sent by a network device.

The broadcast PDSCH is a channel scheduled separately by the network device.

Illustratively, the broadcast PDSCH carries at least one of the following information: an RAR; and a paging message.

Optionally, when the broadcast PDSCHs of the eRedCap terminal are transmitted, the broadcast PDSCHs carrying different information are scheduled separately. For example, description is given by taking the example where broadcast PDSCHs carry the RAR and paging message.

When the broadcast PDSCHs of the eRedCap terminal is transmitted, the broadcast PDSCH carrying the RAR is scheduled separately, and the broadcast PDSCH carrying the paging message is scheduled separately.

In an optional embodiment, the network device is further configured to schedule a second broadcast PDSCH separately when transmitting the second broadcast PDSCH of a non-eRedCap terminal.

Illustratively, the network device may not only separately schedule the first broadcast PDSCH, for example, separately schedule the first broadcast PDSCH carrying the RAR, and schedule the first broadcast PDSCH carrying the paging message; the network device may also separately schedule the second broadcast PDSCH, for example, separately schedule the second broadcast PDSCH carrying the RAR, and schedule the second broadcast PDSCH carrying the paging message.

In an optional embodiment, first indication information is sent.

The first indication information is used to indicate a device type of the first-type terminal and/or a channel bandwidth of a terminal to the network device.

Optionally, a PRACH is sent to the network device, where the PRACH includes the first indication information.

Illustratively, the first indication information includes early indication information, and the early indication information is used to indicate the device type of the eRedCap terminal to the network device.

Illustratively, after the eRedCap terminal sends the PRACH to the network device, the network device reads the early indication information in the PRACH, so that the network device may determine the device type of the terminal based on the early indication information, for example, determine the device type of the eRedCap terminal.

Optionally, the eRedCap terminal sends terminal type information to the network device.

Illustratively, the terminal type information is indicated in an explicit or implicit manner through MSG1. Alternatively, the terminal type information is carried through the PUSCH of message A, etc.

Optionally, the terminal type information includes the device type of the eRedCap terminal. That is, the eRedCap terminal sends the terminal type indication information to the network device so that the network device can determine the device type of the eRedCap terminal according to the terminal type information.

In an optional embodiment, the broadcast PDSCH carrying the paging message is scheduled separately by the network device.

In an optional embodiment, in response to the network device performing separate scheduling for the broadcast PDSCH, a separate scheduling parameter and/or transmission resource parameter configured for the eRedCap terminal is received.

Schematically, in order to make the legacy terminal minimize the reading of downlink control information (DCI) and/or PDSCH that does not belong to itself; and/or, to make the eRedCap terminal minimize the reading of DCI that is not used for scheduling itself, a separate scheduling parameter and/or transmission resource parameter is configured for the eRedCap terminal.

In an optional embodiment, the separate scheduling parameter and/or transmission resource parameter includes at least one of the following:
a bandwidth part (BWP); a control resource set (CORESET); a common search space (CSS); a paging radio network temporary identifier (P-RNTI); a system information radio network temporary identifier (SI-RNTI); a random access radio network temporary identifier (RA-RNTI); a demodulation reference signal (DMRS) sequence or pattern; a downlink control information (DCI) length; an indication using a reserved bit in a DCI.

Optionally, when the separate transmission resource parameter allocated for the broadcast channel is implemented as a BWP, the separate BWP is used to receive a physical downlink control channel (PDCCH) and a physical downlink shared channel (PDSCH) by the eRedCap terminal.

Optionally, when the separate transmission resource parameter allocated for the broadcast channel is implemented as a CORESET, the separate CORESET is used to receive a DCI for scheduling the broadcast PDSCH by the eRedCap terminal.

Optionally, when the separate transmission resource parameter allocated for the broadcast channel is implemented as a CSS, the separate CSS is used to receive the DCI for scheduling the broadcast PDSCH by the eRedCap terminal.

Optionally, when the separate transmission resource parameter allocated for the broadcast channel is implemented as a P-RNTI, the separate P-RNTI is used to send a PDSCH carrying a paging message and a scheduling DCI to the eRedCap terminal.

Optionally, when the separate transmission resource parameter allocated for the broadcast channel is implemented as a SI-RNTI, the separate SI-RNTI is used to receive a PDSCH carrying a system message and the scheduling DCI by the eRedCap terminal.

Optionally, when the separate transmission resource parameter allocated for the broadcast channel is implemented as a RA-RNTI, the separate RA-RNTI is used to receive a PDSCH carrying an RAR message and the scheduling DCI by the eRedCap terminal.

Optionally, when the separate transmission resource parameter allocated for the broadcast channel is implemented as a DMRS sequence or pattern, the separate DMRS sequence or DMRS pattern is used to send the PDCCH and/or the PDSCH by the eRedCap terminal.

Optionally, when the separate transmission resource parameter allocated for the broadcast channel is implemented as a DCI length, the separate DCI length is used to receive the DCI for scheduling the broadcast PDSCH by the eRedCap terminal.

Optionally, when the separate transmission resource parameter allocated for the broadcast channel is implemented as an indication of a reserved bit in the DCI, it is determined whether to receive the PDSCH based on the indicator of the reserved bit in the DCI. For example, when the indicator of the reserved bit in the DCI is 1, the corresponding PDSCH is not received by the eRedCap terminal.

It is worth noting that the above are merely illustrative examples and are not limited to the embodiments of the present application.

In summary, the broadcast PDSCH is scheduled separately to the first-type terminal, so that in a network where different types of terminals coexist, the broadcast PDSCHs corresponding to different terminals are scheduled separately. Thus, when the broadcast PDSCH corresponding to the first-type terminal is scheduled, the impact on the scheduling of other types of terminals can be avoided as much as possible.

Schematically, reference is made to FIG. 7, which is a flowchart of a scheduling method provided by an exemplary embodiment of the present disclosure. The description is given by taking the example where the method is applied to an interaction process between an eRedCap terminal and a network device. As shown in FIG. 7, the method includes the following steps 710 to 720.

In step 710, a broadcast physical downlink shared channel (PDSCH) is separately scheduled to a first-type terminal.

Optionally, the following description is given by taking the first-type terminal implemented as an eRedCap terminal as an example.

The eRedCap terminal is an enhanced terminal with enhanced reduced capability, that is, the eRedCap terminal is represented as an enhanced reduced capability UE. Schematically, enhanced reduced capability is used to indicate enhancement for reducing the terminal capability. Schematically, the eRedCap terminal is a RedCap terminal, and the terminal capability of the eRedCap terminal is reduced compared to an ordinary terminal.

Optionally, the broadcast PDSCH carries at least one of the following information: a random access response (RAR); and a paging message. Schematically, when the broadcast PDSCHs of the eRedCap terminal are transmitted, the broadcast PDSCHs carrying different information are scheduled separately.

Optionally, the eRedCap terminal corresponds to a first broadcast PDSCH; the non-eRedCap terminal corresponds to a second broadcast PDSCH. When the broadcast PDSCH is scheduled separately, the first broadcast PDSCH corresponding to the eRedCap terminal is scheduled separately; and/or, the second broadcast PDSCH corresponding to the non-eRedCap terminal is scheduled separately. Schematically, the non-eRedCap terminal is a legacy terminal.

Optionally, when the broadcast PDSCHs of the eRedCap terminal are transmitted, the broadcast PDSCHs carrying different information are scheduled separately. Schematically, when the broadcast PDSCH carries RAR, the broadcast PDSCH carrying the RAR is scheduled separately; when the broadcast PDSCH carries a paging message, the broadcast PDSCH carrying RAR is scheduled separately.

Illustratively, according to the difference in carried information, the process of separately scheduling the broadcast PDSCHs corresponding to different terminals may be implemented in one of the following forms.

1. According to the difference in carried information, a first broadcast PDSCH corresponding to the eRedCap terminal is scheduled separately.

Illustratively, when the broadcast PDSCH of the eRedCap terminal (i.e., the first broadcast PDSCH corresponding to the eRedCap terminal) carries an RAR, the network device separately schedules the first broadcast PDSCH carrying the RAR.

Alternatively, when the first broadcast PDSCH corresponding to the eRedCap terminal carries a paging message, the network device separately schedules the first broadcast PDSCH carrying the paging message.

Alternatively, when the first broadcast PDSCHs corresponding to the eRedCap terminal carry the RAR and the paging message, the network device separately schedules the first broadcast PDSCH carrying the RAR, and separately schedules the first broadcast PDSCH carrying the paging message.

2. According to the difference in carried information, a second broadcast PDSCH corresponding to the non-eRedCap terminal is scheduled separately.

Illustratively, when the broadcast PDSCH of the non-eRedCap terminal (i.e., the second broadcast PDSCH corresponding to the non-eRedCap terminal) carries an RAR, the network device separately schedules the second broadcast PDSCH carrying the RAR.

Alternatively, when the second broadcast PDSCH corresponding to the non-eRedCap terminal carries a paging message, the network device separately schedules the second broadcast PDSCH carrying the paging message.

Alternatively, when the second broadcast PDSCHs corresponding to the non-eRedCap terminal carry the RAR and the paging message, the network device separately schedules the second broadcast PDSCH carrying the RAR, and separately schedules the second broadcast PDSCH carrying the paging message.

3. According to the difference in carried information, the broadcast PDSCHs corresponding to the eRedCap terminal and the non-eRedCap terminal are scheduled separately.
(1) In the case that the first broadcast PDSCH corresponding to the eRedCap terminal and the second broadcast PDSCH corresponding to the non-eRedCap terminal each carries a corresponding RAR, for example, the first broadcast PDSCH corresponding to the eRedCap terminal carries a first RAR, and the second broadcast PDSCH corresponding to the non-eRedCap terminal carries a second RAR, when the network device separately schedules the broadcast PDSCHs carrying different information, the network device separately schedules the first broadcast PDSCH carrying the first RAR, and separately schedules the second broadcast PDSCH carrying the second RAR.
(2) In the case that the first broadcast PDSCH corresponding to the eRedCap terminal and the second broadcast PDSCH corresponding to the non-eRedCap terminal each carries a corresponding paging message, for example, the first broadcast PDSCH corresponding to the eRedCap terminal carries a first paging message, and the second broadcast PDSCH corresponding to the non-eRedCap terminal carries a second paging message, when the network device separately schedules the broadcast PDSCHs carrying different information, the first broadcast PDSCH carrying the first paging message is separately scheduled, and the second broadcast PDSCH carrying the second paging message is separately scheduled.
(3) In the case that the first broadcast PDSCH corresponding to the eRedCap terminal carries an RAR and the second broadcast PDSCH corresponding to the non-eRedCap terminal carries a paging message, when the network device schedules the broadcast PDSCHs carrying different information separately, the first broadcast PDSCH carrying the RAR is scheduled separately and the second broadcast PDSCH carrying the paging message is scheduled separately.
(4) In the case that the first broadcast PDSCH corresponding to the eRedCap terminal carries a paging message and the second broadcast PDSCH corresponding to the non-eRedCap terminal carries an RAR, when the network device separately schedules the broadcast PDSCHs carrying different information, the first broadcast PDSCH carrying the paging message is scheduled separately and the second broadcast PDSCH carrying the RAR is scheduled separately.
(5) In the case that the first broadcast PDSCHs corresponding to the eRedCap terminal and the second broadcast PDSCHs corresponding to the non-eRedCap terminal respectively carry a corresponding RAR and a paging message, for example, the first broadcast PDSCHs corresponding to the eRedCap terminal carries a first RAR and a first paging message, and the second broadcast PDSCHs corresponding to the non-eRedCap terminal carry a second RAR and a second paging message, when the network device separately schedules the broadcast PDSCHs carrying different information, the first broadcast PDSCH carrying the first RAR is separately scheduled, and the first broadcast PDSCH carrying the first paging message is separately scheduled; the second broadcast PDSCH carrying the second RAR is separately scheduled, and the second broadcast PDSCH carrying the second paging message is separately scheduled.

It is worth noting that the above are merely illustrative examples and are not limited to the embodiments of the present application.

Illustratively, the network device sends the broadcast PDSCH to the eRedCap terminal.

In step 720, the broadcast PDSCH sent by the network device is received.

The broadcast PDSCH is a channel scheduled separately by the network device. That is, when the network device transmits a first broadcast PDSCH of the eRedCap terminal, the first broadcast PDSCH is scheduled separately.

Illustratively, the broadcast PDSCH carries at least one of the following information: an RAR; and a paging message.

Optionally, in response to the network device performing separate scheduling for the broadcast PDSCH carrying the RAR, a PRACH is sent to the network device, where the PRACH includes early indication information, and the early indication information is used to indicate a device type of the eRedCap terminal to the network device.

Optionally, in response to the network device separately scheduling a paging message in the broadcast PDSCH carrying the paging message, the paging message sent by the network device is received.

Optionally, in response to the network device performing separate scheduling for the broadcast PDSCH, a separate scheduling parameter and/or transmission resource parameter configured by the network device is received.

The description that has been given in the above step 610 will not be repeated for the step 720.

It is worth noting that the above are merely illustrative examples and are not limited to the embodiments of the present application.

To summarize, the eRedCap terminal receives the broadcast PDSCH sent by the network device after the network device separately schedules the broadcast PDSCH of the eRedCap terminal. Based on the process of separate scheduling for the broadcast PDSCH performed by the network device, in a network where the legacy terminal and the eRedCap terminal coexist, the reception accuracy of the eRedCap terminal can be improved and the impact on the scheduling of the legacy terminal can be avoided as much as possible.

FIG. 8 is a structural block diagram of a scheduling apparatus provided by an exemplary embodiment of the present disclosure. The scheduling apparatus is applied to a network device. As shown in FIG. 8, the device includes:
a scheduling module 810, configured to separately schedule a broadcast physical downlink shared channel (PDSCH) to a first-type terminal

In an optional embodiment, the broadcast PDSCH carries a random access response (RAR).

The scheduling module 810 is further configured to separately schedule the broadcast PDSCH carrying the RAR.

In an optional embodiment, the apparatus further includes:
a receiving module 820, configured to receive first indication information, where the first indication information is used to indicate a device type of the first-type terminal and/or a channel bandwidth of a terminal to the network device.

In an optional embodiment, the receiving module 820 is further configured to:
receive a physical random access channel (PRACH), where the PRACH carries the first indication information.

In an optional embodiment, the broadcast PDSCH carries a paging message.

The scheduling module 810 is further configured to separately schedule the broadcast PDSCH carrying the paging message.

In an optional embodiment, the receiving module 820 is further configured to:
receive second indication information, where the second indication information is used to indicate a device type of a terminal and/or a channel bandwidth of the terminal.

In an optional embodiment, the receiving module 820 is further configured to:
receive a radio resource control (RRC) signaling, where the RRC signaling carries the second indication information.

In an optional embodiment, the RRC signaling is used to indicate at least one of the following information:
a channel bandwidth corresponding to the first-type terminal;
a data channel bandwidth corresponding to the first-type terminal; and
a PDSCH channel bandwidth corresponding to the first-type terminal.

In an optional embodiment, the apparatus further includes:
a configuration module 830, configured to configure a separate scheduling parameter and/or a separate transmission resource parameter for the first-type terminal.

In an optional embodiment, the separate scheduling parameter and/or the separate transmission resource parameter includes at least one of following:
a bandwidth part (BWP);
a control resource set (CORESET);
a common search space (CSS);
a paging radio network temporary identifier (P-RNTI);
a system information radio network temporary identifier (SI-RNTI);
a random access radio network temporary identifier (RA-RNTI);
a demodulation reference signal (DMRS) sequence or pattern;
a downlink control information (DCI) length; and
an indication using a reserved bit in a DCI.

In an optional embodiment, the configuration module 830 is further configured to:
send a physical downlink control channel (PDCCH) and a physical downlink shared channel (PDSCH) to the first-type terminal by using a separate BWP; and/or,
send a DCI for scheduling the broadcast PDSCH to the first-type terminal by using a separate CORESET; and/or,
send the DCI for scheduling the broadcast PDSCH to the first-type terminal by using a separate CSS; and/or,
send a PDSCH carrying a paging message and a scheduling DCI to the first-type terminal by using a separate P-RNTI; and/or,
send a PDSCH carrying a system message and the scheduling DCI to the first-type terminal by using a separate SI-RNTI; and/or,
send a PDSCH carrying an RAR message and the scheduling DCI to the first-type terminal by using a separate RA-RNTI; and/or,
send the PDCCH and/or the PDSCH to the first-type terminal by using a separate DMRS sequence or DMRS pattern; and/or,
send the DCI for scheduling the broadcast PDSCH to the first-type terminal by using a separate DCI length; and/or,
indicate whether the first-type terminal receives the PDSCH, based on an indication of a reserved bit in the DCI.

In an optional embodiment, the scheduling module 810 is further configured to:
separately schedule a first broadcast PDSCH corresponding to the first-type terminal; and/or,
separately schedule a second broadcast PDSCH corresponding to a second-type terminal.

In an optional embodiment, the first-type terminal includes an enhanced reduced capability (eRedCap) terminal; and the second-type terminal includes an ordinary (legacy) terminal.

FIG. 9 is a structural block diagram of a scheduling apparatus provided by an exemplary embodiment of the present disclosure. The scheduling apparatus is applied to a first-type terminal. As shown in FIG. 9, the apparatus includes:
a receiving module 910, configured to receive a broadcast PDSCH sent by a network device, where the broadcast PDSCH is a channel scheduled separately by the network device.

In an optional embodiment, the apparatus is further configured to:
a sending module 920 is configured to send first indication information, where the first indication information is used to indicate a device type of the first-type terminal and/or a channel bandwidth of a terminal to the network device.

In an optional embodiment, the sending module 920 is further configured to:
send a PRACH to the network device, where the PRACH includes first indication information.

In an optional embodiment, the broadcast PDSCH carries a paging message.

The broadcast PDSCH carrying the paging message is scheduled separately by the network device.

In an optional embodiment, the receiving module 910 is further configured to:
receive a separate scheduling parameter and/or a separate transmission resource parameter configured by the network device.

In an optional embodiment, the separate scheduling parameter and/or the separate transmission resource parameter includes at least one of following:
a bandwidth part (BWP);
a control resource set (CORESET);
a common search space (CSS);
a paging radio network temporary identifier (P-RNTI);
a system information radio network temporary identifier (SI-RNTI);
a random access radio network temporary identifier (RA-RNTI);
a demodulation reference signal (DMRS) sequence or pattern;
a downlink control information (DCI) length; and
an indication using a reserved bit in a DCI.
In an optional embodiment, the receiving module 910 is further configured to:
receive a PDCCH and a PDSCH by using a separate BWP; and/or,
receive a DCI for scheduling the broadcast PDSCH by using a separate CORESET; and/or,
receive the DCI for scheduling the broadcast PDSCH by using a separate CSS; and/or,
receive a PDSCH carrying a paging message and a scheduling DCI by using a separate P-RNTI; and/or,
receive a PDSCH carrying a system message and the scheduling DCI by using a separate SI-RNTI; and/or,
receive a PDSCH carrying an RAR message and the scheduling DCI by using a separate RA-RNTI; and/or,
receive the PDCCH and/or the PDSCH by using a separate DMRS sequence or DMRS pattern; and/or,
receive the DCI for scheduling the broadcast PDSCH by using a separate DCI length; and/or,
determine whether to receive the PDSCH, based on an indication of a reserved bit in the DCI.

In summary, the broadcast PDSCH is scheduled separately to the first-type terminal, so that in a network where different types of terminals coexist, the broadcast PDSCHs corresponding to different terminals are scheduled separately. Thus, when the broadcast PDSCH corresponding to the first-type terminal is scheduled, the impact on the scheduling of other types of terminals can be avoided as much as possible.

It should be noted that the scheduling apparatus provided in the above embodiment is only illustrated by an example of the division of the above functional modules. In actual applications, the above functions may be assigned to be accomplished by different functional modules as needed, that is, the internal structure of the device is divided into different functional modules to complete all or part of the functions described above. In addition, the scheduling apparatus provided in the above embodiment and the embodiment of the scheduling method belong to the same concept, and the specific implementation process thereof is detailed in the method embodiment, which will not be repeated herein.

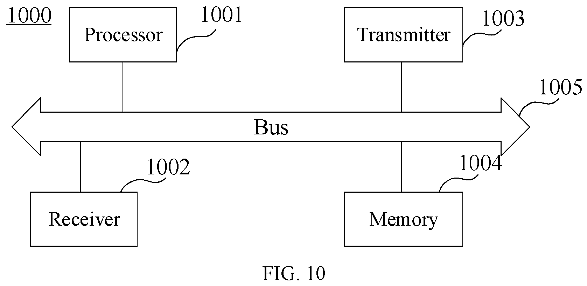

FIG. 10 shows a schematic structural diagram of a communication device 1000 (a terminal or a network device) provided by an exemplary embodiment of the present disclosure. The terminal includes: a processor 1001, a receiver 1002, a transmitter 1003, a memory 1004 and a bus 1005.

The processor 1001 includes one or more processing cores. The processor 1001 executes various functional applications and information processing by running software programs and modules.

The receiver 1002 and the transmitter 1003 may be implemented as one communication component, which may be a communication chip.

The memory 1004 is connected to the processor 1001 via the bus 1005.

The memory 1004 may be used to store at least one instruction, and the processor 1001 is used to execute the at least one instruction to implement various steps in the above method embodiment.

In addition, the memory 1004 may be implemented by any type of volatile or non-volatile storage device or a combination thereof. The volatile or non-volatile storage device includes but is not limited to: a magnetic disk or an optical disk, an electrically erasable programmable read only memory (EEPROM), an erasable programmable read only memory (EPROM), a static random access memory (SRAM), a read only memory (ROM), a magnetic storage device, a flash memory, and a programmable read only memory (PROM).

A non-transitory computer-readable storage medium is provided, when instructions in the non-transitory computer storage medium are executed by a processor of a terminal, the terminal is enabled to execute the above-mentioned scheduling method.

An exemplary embodiment of the present disclosure further provides a scheduling system, and the system includes a terminal and a network device.

The network device includes a scheduling apparatus provided in the embodiment as shown in FIG. 8.

The terminal includes a scheduling apparatus provided in the embodiment as shown in FIG. 9.

An exemplary embodiment of the present disclosure further provides a computer-readable storage medium, in which at least one instruction, at least one program, a code set or an instruction set is stored, and the at least one instruction, the at least one program, the code set or the instruction set is executed by a processor to implement the steps performed by the terminal in the scheduling methods provided by the above-mentioned various method embodiments.

It should be understood that the term "plurality" mentioned in the disclosure refers to two or more. The term "and/or" describes the association relationship of the associated objects, and indicates that there may be three relationships. For example, A and/or B may mean: A exists alone, A and B exist at the same time, and B exists alone. The character "/" generally indicates that the associated objects are in an "or" relationship.

Other implementations of the embodiments of the present disclosure will readily occur to those skilled in the art upon consideration of the specification and practice of the disclosure disclosed herein. The present disclosure is intended to cover any modifications, uses, or adaptations, which follow the general principles of the embodiments of the present disclosure and include common knowledge or conventional technical means in the technical field not disclosed in the present disclosure. The specification and embodiments are to be regarded as exemplary only, and the true scope and spirit of the embodiments of the present disclosure are indicated by the following claims.

It should be understood that the present disclosure is not limited to the exact structures that have been described above and shown in the accompanying drawings, and that various modifications and changes may be made without departing from the scope thereof. The scope of the present disclosure is limited only by the appended claims.

## Claims

1. A scheduling method, wherein the method is performed by a network device, and the method comprises:
separately scheduling a broadcast physical downlink shared channel (PDSCH) to a first-type terminal.

2. The method according to claim 1, wherein the broadcast PDSCH carries a random access response (RAR); and
the method further comprises:
separately scheduling the broadcast PDSCH carrying the RAR.

3. The method according to claim 2, wherein the method further comprises:
receiving first indication information, wherein the first indication information is used to indicate a device type of the first-type terminal and/or a channel bandwidth of a terminal to the network device.

4. The method according to claim 3, wherein the method further comprises:
receiving a physical random access channel (PRACH), wherein the PRACH carries the first indication information.

5. The method according to claim 1, wherein the broadcast PDSCH carries a paging message; and
the method further comprises:
separately scheduling the broadcast PDSCH carrying the paging message.

6. The method according to claim 5, wherein the method further comprises:
receiving second indication information, wherein the second indication information is used to indicate a device type of a terminal and/or a channel bandwidth of the terminal.

7. The method according to claim 6, wherein the method further comprises:
receiving a radio resource control (RRC) signaling, wherein the RRC signaling carries the second indication information.

8. The method according to claim 7, wherein the RRC signaling is used to indicate at least one of following information:
a channel bandwidth corresponding to the first-type terminal;
a data channel bandwidth corresponding to the first-type terminal; and
a PDSCH channel bandwidth corresponding to the first-type terminal.

9. The method according to any one of claims 1 to 8, wherein the method further comprises:
configuring a separate scheduling parameter and/or a separate transmission resource parameter for the first-type terminal.

10. The method according to claim 9, wherein the separate scheduling parameter and/or the separate transmission resource parameter comprises at least one of following:
a bandwidth part (BWP);
a control resource set (CORESET);
a common search space (CSS);
a paging radio network temporary identifier (P-RNTI);
a system information radio network temporary identifier (SI-RNTI);
a random access radio network temporary identifier (RA-RNTI);
a demodulation reference signal (DMRS) sequence or pattern;
a downlink control information (DCI) length; and
an indication using a reserved bit in a DCI.

11. The method according to claim 10, wherein the method further comprises:
sending a physical downlink control channel (PDCCH) and a physical downlink shared channel (PDSCH) to the first-type terminal by using a separate BWP; and/or,
sending DCI for scheduling the broadcast PDSCH to the first-type terminal by using a separate CORESET; and/or,
sending the DCI for scheduling the broadcast PDSCH to the first-type terminal by using a separate CSS; and/or,
sending a PDSCH carrying a paging message and a scheduling DCI to the first-type terminal by using a separate P-RNTI; and/or,
sending a PDSCH carrying a system message and the scheduling DCI to the first-type terminal by using a separate SI-RNTI; and/or,
sending a PDSCH carrying an RAR message and the scheduling DCI to the first-type terminal by using a separate RA-RNTI; and/or,
sending the PDCCH and/or the PDSCH to the first-type terminal by using a separate DMRS sequence or DMRS pattern; and/or,
sending the DCI for scheduling the broadcast PDSCH to the first-type terminal by using a separate DCI length; and/or,
indicating whether the first-type terminal receives the PDSCH, based on an indication of a reserved bit in the DCI.

12. The method according to any one of claims 1 to 8, wherein the method further comprises:
separately scheduling a first broadcast PDSCH corresponding to the first-type terminal; and/or,
separately scheduling a second broadcast PDSCH corresponding to a second-type terminal.

13. The method according to claim 12, wherein,
the first-type terminal comprises an enhanced reduced capability (eRedCap) terminal; and
the second-type terminal comprises a legacy terminal.

14. A scheduling method, wherein the method is performed by a first-type terminal, and the method comprises:
receiving a broadcast PDSCH sent by a network device, wherein the broadcast PDSCH is a channel scheduled separately by the network device.

15. The method according to claim 14, wherein the method further comprises:
sending first indication information, wherein the first indication information is used to indicate a device type of the first-type terminal and/or a channel bandwidth of a terminal to the network device.

16. The method according to claim 15, wherein the method further comprises:
sending a PRACH to the network device, wherein the PRACH comprises first indication information.

17. The method according to claim 14, wherein the broadcast PDSCH carries a paging message; and
the broadcast PDSCH carrying the paging message is scheduled separately by the network device.

18. The method according to any one of claims 14 to 17, wherein the method further comprises:
receiving a separate scheduling parameter and/or a separate transmission resource parameter configured by the network device.

19. The method according to claim 18, wherein the separate scheduling parameter and/or the separate transmission resource parameter comprises at least one of following:
a bandwidth part (BWP);
a control resource set (CORESET);
a common search space (CSS);
a paging radio network temporary identifier (P-RNTI);
a system information radio network temporary identifier (SI-RNTI);
a random access radio network temporary identifier (RA-RNTI);
a demodulation reference signal (DMRS) sequence or pattern;
a downlink control information (DCI) length; and
an indication using a reserved bit in a DCI.

20. The method according to claim 19, wherein the method further comprises:
receiving a PDCCH and a PDSCH by using a separate BWP; and/or,
receiving DCI for scheduling the broadcast PDSCH by using a separate CORESET; and/or,
receiving the DCI for scheduling the broadcast PDSCH by using a separate CSS; and/or,
receiving a PDSCH carrying a paging message and a scheduling DCI by using a separate P-RNTI; and/or,
receiving a PDSCH carrying a system message and the scheduling DCI by using a separate SI-RNTI; and/or,
receiving a PDSCH carrying an RAR message and the scheduling DCI by using a separate RA-RNTI; and/or,
receiving the PDCCH and/or the PDSCH by using a separate DMRS sequence or DMRS pattern; and/or,
receiving the DCI for scheduling the broadcast PDSCH by using a separate DCI length; and/or,
determining whether to receive the PDSCH, based on an indication of a reserved bit in the DCI.

21. A scheduling apparatus, applied to a network device, wherein the apparatus comprises:
a scheduling module, configured to separately schedule a broadcast physical downlink shared channel (PDSCH) to a first-type terminal.

22. A scheduling apparatus, applied to a first-type terminal, the apparatus comprising:
a receiving module, configured to receive a broadcast PDSCH sent by a network device, wherein the broadcast PDSCH is a channel scheduled separately by the network device.

23. A network device, wherein the network device comprises:
a processor; and
a transceiver connected to the processor;
wherein the processor is configured to execute executable instructions to implement the scheduling method according to any one of claims 1 to 13.

24. A terminal, wherein the terminal comprises:
a processor; and
a transceiver connected to the processor;
wherein the processor is configured to execute executable instructions to implement the scheduling method according to any one of claims 14 to 20.

25. A computer-readable storage medium, wherein at least one instruction is stored in the computer-readable storage medium, and the at least one instruction is executed by a processor to implement the scheduling method according to any one of claims 1 to 20.
